# EUROPÄISCHE PATENTANMELDUNG

(11) **EP 3 854 830 A1**
(43) Veröffentlichungstag der Anmeldung: **28.07.2021**
(21) Anmeldenummer: 21151763.6
(22) Anmeldetag: 15.01.2021
(51) Int. Cl.: C08G 18/10, C08G 18/38, C08G 18/48, C08G 18/50

(54) **POLYURETHANFORMULIERUNGEN MIT VERBESSERTEN FLIESSEIGENSCHAFTEN UND DARAUS HERGESTELLTE POLYURETHANFORMTEILE**

(30) Priorität: 22.01.2020 EP 20153224
(71) Anmelder: Covestro Deutschland AG, 51373 Leverkusen (DE)
(72) Erfinder: Schlecht, Sebastian, 40721 Hilden (DE); Popp, Stefan, 50259 Pulheim (DE); Wolf, Lothar, 51371 Leverkusen (DE)
(74) Vertreter: Levpat

(57) **Zusammenfassung**

Die vorliegende Erfindung betrifft ein Polyurethanreaktivsystem, das eine gegenüber Isocyanaten reaktive Mischung beinhaltend ein Polyol, ein Fettsäureamid eines tertiären Amins und ein Aminpolyetherpolyol umfasst, mit besonders gutem Fließverhalten, ein Verfahren zur Herstellung von daraus erhältlichen Polyurethanschaumstoffen sowie diese Polyurethanschaumstoffe.

## Beschreibung

Geschäumte Polyurethanformteile hergestellt nach dem RIM Prozess (Reaction Injection Molding) werden unter anderem als technische Gehäuseteile in vielfältigen Bereichen (z.B. Medizingeräte) eingesetzt. Der Dichtebereich der geschäumten Polyurethanformteile erstreckt sich hier meist über einen Bereich von 400 - 800 kg/m³. Herausragende Eigenschaften der Polyurethanschaumformteile sind hierbei die detailgetreue Abbildung der Formoberflächen, gute Lackierbarkeit, mögliche Wandstärkensprünge sowie eine große Vielfältigkeit in Aussehen und Design. Ein weiterer Vorteil des Kunststoffmaterials Polyurethan ist die ausgezeichnete Kombinierbarkeit mit anderen Materialien (z.B. Holz, Metall) zur Herstellung von Kompositen.

Polyurethanrohstoffe zeichnen sich im Vergleich zu thermoplastischen Materialien durch niedrige Viskositäten (< 3000 mPa·s ) aus, so dass ihre Verarbeitung im RIM Prozess geringe Zuhaltekräfte der Schließe benötigt und damit eine effiziente und kostengünstige Herstellung der Formteile ermöglicht (siehe Kunststoff Handbuch 7; Polyurethane - herausgegeben von Günter Oertel; 3. Neu bearbeitete Auflage; Carl Hanser Verlag, München, 1993; ISBN 3-446-16263-1; Kapitel 7.4.4 und 7.2.).

An die Polyurethanreaktivsysteme, umfassend Polyol bzw. allgemeiner gegenüber Isocyanaten reaktive Komponente, Isocyanat und Zusatzstoffe, werden die Anforderungen gestellt, eine möglichst kurze Formstandzeit des resultierenden Polyurethanformteils zu erreichen, beim Entformen des Formteils trennfreundlich zu wirken und dabei gleichzeitig selbst über einen längeren Zeitraum phasenstabil zu sein. So ist in EP 1 431 322 B1 eine stabile Polyoldispersion beschrieben, die mittels internen Trennmitteln ein gutes Trennverhalten der geschäumten Polyurethanformteile aufweist und gleichzeitig ausreichend stabil ist und erst nach längerer Lagerung Phasentrennung zeigt.

Nachteil dieser Polyurethanreaktivsysteme ist das schlechte Fließverhalten, welches sich in einer breiten Rohdichteverteilung des geschäumten Polyurethans innerhalb des Formteiles zeigt. Des Weiteren muss zum vollständigen Befüllen von komplexen Bauteilen mit langen Fließwegen eine hohe Formteildichte verwendet werden, wohingegen generell eine geringere Formteildichte gewünscht wird.

Aufgabe der vorliegenden Erfindung war es daher, ein Polyurethanreaktivsystem und daraus resultierendes geschäumtes Polyurethanformteil in der Dichte 400 - 800 kg/m³ (gemäß DIN EN ISO 845) zur Verfügung zu stellen, welches besonders gutes Fließverhalten zeigt und keine Einschränkungen in Formstandzeit, Trennverhalten oder Phasenstabilität mit sich bringt. Dieses Polyurethanreaktivsystem wird zur Herstellung von Gehäuseteilen mit komplexen Geometrien und langen Fließwegen nach dem RIM Prozess eingesetzt.

Überraschenderweise wurde gefunden, dass die Kombination dreier Komponenten A1 - A3, nämlich einer Komponente (A1) mit einem Reaktionsprodukt eines Amins, das mindestens zwei Aminogruppen enthält, wobei mindestens eine Aminogruppe ein tertiäres Amin ist, mit einer Fettsäure der Kettenlänge C₁₆ - C₂₀ (Komponente (A2)) und einem Reaktionsprodukt eines Monoalkylamins mit einem Epoxid (Komponente (A3)) diese Aufgabe erfüllt.

Das erfindungsgemäße Polyurethanreaktivsystem umfasst:
eine gegenüber Isocyanaten reaktive Mischung A), bestehend aus:
   67 - 95 Gew.-%, bezogen auf die gegenüber Isocyanaten reaktive Mischung A), Komponente A1: Mischung umfassend ein oder mehrere Polyole A1a mit einer OHZ > 500 mg KOH/g und einer Funktionalität f zwischen 2,5 und 6 und ein oder mehrere Polyole A1b mit einer OHZ < 100 mg KOH/g und einer Funktionalität f zwischen 2 und 4, jeweils unabhängig voneinander ausgewählt aus der Gruppe bestehend aus Polyetherpolyolen, Polyesterpolyolen, Polyethercarbonatpolyolen, Polyetheresterpolyolen und Amingestarteten Polyetherpolyolen, wobei die Misch-OHZ der Komponente A1 zwischen 300 und 800 mg KOH/g liegt,
   2-18 Gew.-%, bezogen auf die gegenüber Isocyanaten reaktive Mischung A), Komponente A2: Reaktionsprodukt eines Amins, das mindestens zwei Aminogruppen enthält, wobei mindestens eine Aminogruppe ein tertiäres Amin ist, mit einer Fettsäure der Kettenlänge C₁₆ -C₂₀,
   3-15 Gew.-%, bezogen auf die gegenüber Isocyanaten reaktive Mischung A), Komponente A3: Reaktionsprodukt, erhalten aus der Addition von Propylenoxid und/oder Ethylenoxid an ein Monoalkylamin mit einem Alkylrest der Kettenlänge C₂ bis C₆ mit OHZ von 260 bis 510 mg KOH/g,
   wobei die Summe der Gew.-% der Komponenten A1, A2 und A3 100 Gew.-% beträgt,
Zusatzstoffe B), umfassend:
   0,1 - 2,0 Gew.-%, bezogen auf die gegenüber Isocyanaten reaktive Mischung A), Wasser,
   0,1 - 3,0 Gew.-%, bezogen auf die gegenüber Isocyanaten reaktive Mischung A), einen oder mehrere Zellstabilisatoren,
   gegebenenfalls Kohlenwasserstoffe als physikalische Treibmittel,
   gegebenenfalls Katalysatoren,
   gegebenenfalls interne Trennmittel,
   gegebenenfalls Hilfs- und Füllstoffe (z.B. flüssige oder feste Flammschutzmittel, mineralische Füllstoffe),
Isocyanatkomponente C), bestehend aus:
   bei Raumtemperatur flüssigen Di- und/oder Polyisocyanaten der Diphenylmethanreihe, Modifikationen oder Prepolymeren davon oder Mischungen daraus mit einem NCO-Gehalt von 25 Gew.-% (Prepolymere) bis 33,6 Gew.-%,
wobei die Komponenten A), B) und C) in einer Menge eingesetzt werden, dass die Kennzahl 80 bis 130 beträgt.

Im Sinne dieser Anmeldung handelt es sich bei der gegenüber Isocyanaten reaktiven Mischung um eine Mischung verschiedener Komponenten, von denen mindestens eine Komponente mindestens eine gegenüber Isocyanaten reaktive funktionelle Gruppe aufweist, insbesondere wobei es sich bei der gegenüber Isocyanaten reaktiven funktionellen Gruppe um eine Hydroxygruppe handelt.

In einer bevorzugten Ausführungsform weisen weder die gegenüber Isocyanaten reaktive Mischung A) noch die Zusatzstoffe B) noch die Isocyanatkomponente C) Dicarbonatester wie Diethyldicarbonat in einem Ausmaß auf, das über natürliche Verunreinigungen hinausgeht. In einer besonders bevorzugten Ausführungsform weisen weder die gegenüber Isocyanaten reaktive Mischung A) noch die Zusatzstoffe B) noch die Isocyanatkomponente C) Dicarbonatester wie Diethyldicarbonat auf. Bevorzugt beträgt die Misch-OHZ der Komponente A1 zwischen 400 und 650 mg KOH/g.

Die bevorzugte Einsatzmenge der Komponente A2 beträgt 5-15 Gew.-%, besonders bevorzugt 8 - 13 Gew.-%, bezogen auf die gegenüber Isocyanaten reaktive Mischung A.

Bevorzugt ist eine Komponente A3 erhältlich aus der Addition von Ethylenoxid an ein Monoalkylamin. Weiterhin ist bevorzugt eine Komponente A3 mit einer OHZ von 400 - 500 mg KOH/g sowie in einer Menge von 4-12 Gew.-%, besonders bevorzugt 7-12 Gew.-%, bezogen auf die gegenüber Isocyanaten reaktive Mischung A.

Bevorzugter gegebenenfalls vorhandener Kohlenwasserstoff als physikalisches Treibmittel ist Pentan.

Weiterhin bevorzugt ist eine Kennzahl des Polyurethanreaktivsystems von 90 bis 120, besonders bevorzugt 95 bis 105.

In einer bevorzugten Ausführungsform handelt es sich bei der Komponente A2 um Reaktionsprodukte einer Fettsäure der Kettenlänge C₁₆ - C₂₀ mit einem Amin der allgemeinen Formel R,R'-N-X-NH₂ wobei X, R und R' unabhängig voneinander für substituierte oder unsubstituierte, lineare oder verzweigte, aromatische oder aliphatische Kohlenwasserstoffreste stehen. Bevorzugt sind R und R' unabhängig voneinander Kohlenwasserstoffreste mit 1 bis 6, besonders bevorzugt 1 bis 4, noch mehr bevorzugt 1 bis 3 oder 1 bis 2 C-Atomen. Zum Beispiel kann das Reaktionsprodukt aus 3-(Dimethylamino)-1-propylamin mit Rizinusöl oder bevorzugt mit Tallöl hergestellt werden. Sehr bevorzugt ist das Reaktionsprodukt aus 3-(Dimethylamino)-1-propylamin mit Tallöl.

Erfindungsgemäß besteht die Isocyanatkomponente aus bei Raumtemperatur flüssigen Di- und/oder Polyisocyanaten der Diphenylmethanreihe, Modifikationen oder Prepolymeren davon oder Mischungen daraus mit einem NCO-Gehalt von 25 Gew.-% (Prepolymere) bis 33,6 Gew.-%, das heißt die Isocyanatkomponente weist außer den genannten keine weiteren Bestandteile, insbesondere keine Dicarbonatester wie Diethyldicarbonat, in einem Ausmaß, das über natürliche Verunreinigungen hinausgeht, auf. Insbesondere weist die Isocyanatkomponente keine Dicarbonatester wie Diethylcarbonat auf.

Die Kennzahl beschreibt im Sinne dieser Anmeldung das Verhältnis der reaktiven Wasserstoffatome der Polyolkomponte A) und Zusatzstoffe B) zu der Anzahl der NCO-Gruppen der Isocyanatkomponente C). Bei einer Kennzahl von 100 liegt ein äquimolares Verhältnis (1:1) von reaktiven Wasserstoffatomen zu NCO-Gruppen vor. Eine Kennzahl größer 100 beschreibt einen Überschuss an NCO-Gruppen und eine Kennzahl kleiner 100 einen Unterschuss an NCO-Gruppen.

Die OHZ (OH-Zahl, Hydroxylzahl) ist ein Maß für den Gehalt an Hydroxygruppen in dem jeweiligen Polyol bzw. der gegenüber Isocyanaten reaktiven Mischung. Die OHZ gibt die Menge Kaliumhydroxid in Milligramm an, welche der bei der Acetylierung von einem Gramm Polyol gebundenen Menge Essigsäure gleichwertig ist. Die Bestimmung der OHZ erfolgte nach DIN 53240.

Der Isocyanatgehalt beschreibt die prozentuale Gewichtsmenge an Isocyanatgruppen im Gemisch und ist definiert als Quotient aus Masse der Isocyanatgruppen und Gesamtmasse des Gemischs in Prozent. Die Bestimmung des NCO-Gehaltes erfolgte nach DIN EN ISO 11909.

Die Funktionalität im Sinne dieser Anmeldung ist die theoretische Funktionalität, bezogen auf die Anzahl aktiver Wasserstoffe in den Starter-Molekülen, aus denen die Polyether- oder Polyesterpolyole hergestellt werden. Für jedes individuelle Polyol ist also die theoretische Funktionalität eine ganze Zahl. Mischungen solcher Polyole, beispielsweise aus einer Mischung aus di- oder trifunktionellen Startern erzeugte Polyole, können eine theoretische Funktionalität aufweisen, die zwischen den Funktionalitäten der Starter liegt. Beispielsweise weist eine Mischung aus Polyolen, hergestellt aus einer äquimolaren Mischung aus Ethylenglykol und Glycerin, eine theoretische Funktionalität von 2,5 auf.

### Beschreibung der Komponenten:

Die gegenüber Isocyanaten reaktive Mischung A) besteht aus den Komponenten A1, A2 und A3, welche in Summe 100 Gew.-% der gegenüber Isocyanaten reaktive Mischung A) ergeben.

### Komponente A1:

Die von der Komponente A1 umfassten Verbindungen sind ausgewählt aus der Gruppe bestehend aus Polyetherpolyolen, Polyesterpolyolen, Polyethercarbonatpolyolen, Polyetheresterpolyolen und amingestarteten Polyetherpolyolen.

Bei den Polyetherpolyolen handelt es sich bevorzugt um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die erfindungsgemäß eingesetzten Poly(oxyalkylen)polyole aus einer Starterverbindung oder einem Starterverbindungsgemisch mit durchschnittlich 2 bis 6 aktiven Wasserstoffatomen und einem oder mehreren Alkylenoxiden hergestellt. Bevorzugte Starterverbindungen sind Moleküle mit 2 bis 8, insbesondere 3 bis 8, besonders bevorzugt 3 bis 6, Hydroxylgruppen pro Molekül wie Triethanolamin, Glycerin, Trimethylolpropan, Pentaerythrit, Sorbit und Saccharose. Die Starterverbindungen können allein oder im Gemisch, unter anderem mit difunktionellen Starterverbindungen wie Diethylenglykol, Dipropylenglykol, Triethylenglykol, Tripropylenglykol, 1,4-Butandiol, 1,6-Hexandiol verwendet werden. Die erfindungsgemäß eingesetzten Polyetherpolyole werden aus einem oder mehreren Alkylenoxiden hergestellt. Bevorzugt verwendete Alkylenoxide sind Ethylenoxid, Propylenoxid und Butylenoxid. Diese können allein oder im Gemisch verwendet werden. Bei Verwendung im Gemisch ist es möglich, die Alkylenoxide statistisch oder blockweise oder beides nacheinander umzusetzen.

Allgemein können Polyesterpolyole eingesetzt werden, die durch Kondensation von Carbonsäuren oder Mischungen von Carbonsäuren und organischen Hydroxylverbindungen oder Mischungen aus organischen Hydroxylverbindungen hergestellt werden. Die eingesetzten Polyesterpolyole können vorzugsweise durch Kondensation von Alkoholen, bevorzugt Diolen mit 2 bis 12 Kohlenstoffatomen, besonders bevorzugt 2 bis 6 Kohlenstoffatomen, beispielsweise Ethylenglykol, Diethylenglykol, Propylenglycol, Butandiol, Glycerin oder Trimethylolpropan mit Carbonsäuren, bevorzugt Dicarbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, besonders bevorzugt Phthalsäure, Isophthalsäure, Terephthalsäure und den isomeren Naphthalindicarbonsäuren, hergestellt werden.

Allgemein können zur Herstellung der Polyethercarbonatpolyole Reaktionen auf Basis von H-funktionellen Startsubstanzen, Alkylenoxiden zur Aktivierung - gegebenenfalls in der Gegenwart von CO₂ - und Alkylenoxiden zur Polymerisation, die sich von den Alkylenoxiden zur Aktivierung unterscheiden können, in Gegenwart von CO₂ genutzt werden.

Es können Alkylenoxide mit 2 bis 24 C-Atomen eingesetzt werden, zum Beispiel Ethylenoxid, Propylenoxid, 1-Butenoxid, 2,3 -Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3 -Hexenoxid, 3,4-Hexenoxid, 2-Methyl-l,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan und Mischungen daraus. Vorzugsweise werden als Alkylenoxide Ethylenoxid und/oder Propylenoxid und/oder 1,2 Butylenoxid, besonders bevorzugt Propylenoxid eingesetzt.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkoholen, Thioalkoholen, Hydroxyestern, Polyetherpolyolen, Polyesterpolyolen, Polyesteretherpolyolen, Polyethercarbonatpolyolen, Polycarbonatpolyolen, Polycarbonaten, Polyethyleniminen, Polyetheraminen, Polytetrahydrofuranen, Polytetrahydrofuranaminen und Mischungen daraus.

Als H-funktionelle Startersubstanzen geeignete mehrwertige Alkohole sind beispielweise zweiwertige Alkohole wie beispielweise Ethylenglykol, Diethylenglykol, Propylenglykol, Dipropylenglykol, 1,3-Propandiol, 1,4-Butandiol, Neopentylglykol, 1,5-Pentandiol, 1,6-Hexandiol, 1,8-Octandiol, 1,10-Decandiol, 1,12-Dodecandiol, Triethylenglykol, Tetraethylenglykol, Polyethylenglykole, Dipropylenglykol, Tripropylenglykol, Polypropylenglykole, Dibutylenglykol und Polybutylenglykole, dreiwertige Alkohole wie beispielsweise Trimethylolpropan oder Glycerin, vierwertige Alkohole wie beispielsweise Pentaerythrit, Polyalkohole wie beispielweise Sorbit, Hexit, Saccharose, Stärke, Stärkehydrolysate, Cellulose, Cellulosehydrolysate, hydroxyfunktionalisierte Fette und Öle und Mischungen daraus.

Allgemein können zur Herstellung der Polyetheresterpolyole an sich bekannte Reaktionen auf Basis von H-funktionellen Startsubstanzen, Alkylenoxiden und Carbonsäuren genutzt werden.

Als H-funktionelle Startsubstanzen können dabei die gleichen Verbindungen wie die für die Polyethercarbonatpolyole genannten H-funktionellen Startsubstanzen genutzt werden.

Ebenso können als Alkylenoxide die für die Polyethercarbonatpolyole genannten Substanzen genutzt werden, vorzugsweise Ethylenoxid, Propylenoxid und/oder 1,2 Butylenoxid.

Bevorzugte Carbonsäuren für die Herstellung der Polyetheresterpolyole sind Dicarbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, besonders bevorzugt Phthalsäure, Isophthalsäure, Terephthalsäure und die isomeren Naphthalindicarbonsäuren.

Des Weiteren können diamin- und/oder polyamingestartete Polyether eingesetzt werden. Dies sind Additionsprodukte aus primäre und/oder sekundäre Aminogruppen aufweisenden aliphatischen oder aromatischen Di-oder Polyaminen mit Alkylenoxiden. Beispiele für solche Aminverbindungen sind Phenylendiamine, 2,3-, 2,4-, 3,4- oder 2,6-Toluylendiamin, 4,4'-, 2,4'- oder 2,2'-Diaminodiphenylmethan, Isophorondiamin und Ethylendiamin, die mit den gleichen Ethylenoxiden wie bei der Herstellung der Polyetherpolyole umgesetzt werden können. Es können auch Mischungen daraus eingesetzt werden.

### Komponente A2:

Die Komponente A2 ist ein Reaktionsprodukt eines Amins, das mindestens zwei Aminogruppen enthält, wobei mindestens eine Aminogruppe ein tertiäres Amin ist, mit einer Fettsäure der Kettenlänge C₁₆ - C₂₀. Die Fettsäure ist bevorzugt eine biobasierte Fettsäure oder ein Derivat davon. Bevorzugt sind Reaktionsprodukte eines Amin der allgemeinen Formel R,R'-N-X-NH₂ wobei X, R und R' unabhängig voneinander für substituierte oder unsubstituierte, lineare oder verzweigte, aromatische oder aliphatische Kohlenwasserstoffreste stehen. Bevorzugt sind R und R' unabhängig voneinander Kohlenwasserstoffreste mit 1 bis 6, besonders bevorzugt 1 bis 4, noch mehr bevorzugt 1 bis 3 oder 1 bis 2 C-Atomen. Zum Beispiel kann das Reaktionsprodukt aus 3-(Dimethylamino)-1-propylamin mit Rizinusöl oder bevorzugt mit Tallöl hergestellt werden. Sehr bevorzugt ist das Reaktionsprodukt aus 3-(Dimethylamino)-1-propylamin mit Tallöl.

### Komponente A3:

Die Komponente A3 ist ein Reaktionsprodukt, erhältlich aus der Addition von Propylenoxid und/oder Ethylenoxid an ein Monoalkylamin, wobei der Alkylrest die Kettenlänge C₂ bis C₆ aufweist und wobei A3 eine OHZ von 260 bis 510 mg KOH/g, bevorzugt von 400 bis 500 mg KOH/g aufweist. Besonders bevorzugt ist A3 erhältlich aus der Addition von Ethylenoxid an ein Monoalkylamin.

Zu den Zusatzstoffen B) gehört das entsprechende Treibmittel. Entweder werden die Polyurethanschäume rein Wasser getrieben hergestellt oder durch eine Abmischung aus Wasser und physikalischen Treibmitteln (wie z.B. Pentan) getrieben.

Weiterhin werden konventionelle Zellstabilisatoren eingesetzt, insbesondere silikonbasierte Zellstabilisatoren. Bei diesen Verbindungen handelt es sich vorzugsweise um solche, die eine amphiphile Struktur aufweisen und in der Lage sind, die Oberflächenspannung der Mischung der Komponenten A) und B) zu reduzieren. Vorzugsweise weist der silikonbasierte Zellstabilisator einen Molekülteil mit siliziumorganischen Bausteinen, wie Dimethylsiloxan oder Methylphenylsiloxan, und einen Molekülteil mit einer chemischen Struktur, die den Polyolen ähnelt, auf.

Als weitere Hilfs- und/oder Zusatzstoffe B) können gegebenenfalls Paraffine, Fettalkohole, Pigmente und/oder Farbstoffe, flammhemmende Substanzen, ferner Stabilisatoren gegen Alterungs- und Witterungseinflüsse, Weichmacher und fungistatisch und bakteriostatisch wirkende Substanzen, sowie Füllstoffe wie Bariumsulfat, Kieselgur, Ruß oder Schlämmkreide, Zellregler, Reaktionsverzögerer und weitere Stabilisatoren, wie z.B. Polysiloxane, eingesetzt werden. Einzelheiten über Verwendungs- und Wirkungsweise dieser Hilfs- und Zusatzmittel sind im Kunststoff-Handbuch, Band VII, herausgegeben von Vieweg und Höchtlen, Carl Hanser Verlag, München 1966, z.B. auf den Seiten 121 bis 205 beschrieben.

Bei dem gegebenenfalls vorhandenen Katalysator kann es sich um jeglichen konventionellen Katalysator handeln, der geeignet ist, die Reaktion von Polyolen und Isocyanaten zu katalysieren. Dazu gehören unter anderem Amine, Phosphane, Metallsalze, Metallchelate, Alkoholate und Phenolate. Beispiele solcher Katalysatoren sind zum Einen Aminverbindungen wie Triethylendiamin, 2,3-Dimethyl-3,4,5,6-tetrahydropyrimidin, Triethylamin, Tributylamin, Dimethylbenzylamin, N-Methylmorpholin, N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin, Triethanolamin, Triisopropanolamin, N-Methyldiethanolamin, N-Ethyldiethanolamin und Dimethylethanolamin, zum Anderen Organometallverbindungen, insbesondere Zinn- oder Bismutsalze, bevorzugt Zinn- oder Bismutsalze organischer Säuren wie Zinnacetat, Zinnoctoat, Zinn-2-ethylhexanoat, Zinnlaurat, Dibutylzinndiacetat, Dibutylzinndilaurat, Dibutylzinnmaleat, Dioctylzinndiacetat, Bismutneodecanoat, Bismut-2-ethylhexanoat, Bismutoctoat. Es können auch Mischungen von zwei oder mehr Katalysatoren eingesetzt werden.

Gegebenenfalls werden bei der Herstellung von Polyurethanen übliche interne Trennmittel eingesetzt, beispielsweise grenzflächenaktive Moleküle, insbesondere Fettsäuren wie Stearinsäure, Amine langkettiger Carbonsäuren wie Stearinamid, Fettsäureester, Metallsalze langkettiger Fettsäuren wie Zinkstearat, oder Silikone.

Insbesondere weisen die Zusatzstoffe B) keine Dicarbonatester wie Diethyldicarbonat in einem Ausmaß auf, das über natürliche Verunreinigungen hinausgeht. In einer besonders bevorzugten Ausführungsform weisen die Zusatzstoffe B) keine Dicarbonatester wie Diethyldicarbonat auf.

Als Isocyanatkomponente C) werden bei Raumtemperatur sogenannte flüssige Di- und/oder Polyisocyanate der Diphenylmethanreihe eingesetzt. Hierzu gehören unter anderem bei Raumtemperatur flüssige und gegebenenfalls entsprechend modifizierte Gemische von 4,4'-Diisocyanatodiphenylmethan mit 2,4'- und gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höhere Homologe enthalten und die in an sich bekannter Weise durch Phosgenierung von Anilin/Formaldehyd-Kondensaten zugänglich sind. Auch Urethan- und/oder Carbodiimidgruppen aufweisende Modifizierungsprodukte, Allophanat- bzw. Biuretgruppen aufweisende Modifizierungsprodukte oder Prepolymere dieser Di- und/oder Polyisocyanate sind geeignet.

Bevorzugte Prepolymere sind Reaktionsprodukte aus den vorgenannten Di- und/oder Polyisocyanaten und einer Komponente A1. Besonders bevorzugt sind solche Prepolymere, die gleichzeitig als interne Trennmittel fungieren. In einem solchen Fall kann es sich beispielsweise bei der Komponente A1 um das Reaktionsprodukt einer oder mehrerer Fettsäuren mit 10 bis 40 Kohlenstoffatomen und gegebenenfalls einer oder mehreren Di- oder Polycarbonsäuren mit einem oder mehreren Alkoholen (f ≥2), oder einer oder mehreren Polyetherpolyolkomponenten mit Ethylenoxid- und/oder Propylenoxidgruppen im Molekül mit einer OH-Zahl von 200 bis 1000 mg KOH/g, bevorzugt von 400 bis 800 mg KOH/g, mit einer Funktionalität von 2 bis 6, bevorzugt von 2 bis 4, handeln.

Die Isocyanatkomponente C) weist eine mittlere NCO-Funktionalität von 2,1 bis 5,0, vorzugsweise 2,5 bis 3,1 auf. Der NCO-Gehalt liegt zwischen 25 und 33,6 %.

Insbesondere weist die Isocyanatkomponente C) keine Dicarbonatester wie Diethyldicarbonat in einem Ausmaß auf, das über natürliche Verunreinigungen hinausgeht. In einer besonders bevorzugten Ausführungsform weist die Isocyanatkomponente C) keine Dicarbonatester wie Diethyldicarbonat auf.

Das erfindungsgemäße Polyurethanreaktivsystem zeigt ein besonders gutes Fließverhalten. Daraus resultiert, dass die Dichteverteilung des resultierenden Polyurethanschaums in einem komplexen Formteil mit langen Fließwegen, Spalten und Wandstärkensprüngen eng ist und das Formteil gleichzeitig komplett gefüllt ist. Misst man z.B. die Dichte an verschiedenen Stellen des Formteiles, so ist die Standardabweichung der Dichte niedrig. Des Weiteren kann mit dem erfindungsgemäßen Polyurethanreaktivsystem ein Formteil in einer geringen Dichte hergestellt werden. Je niedriger die Formteildichte, desto geringer ist die benötigte Menge an Polyurethanformulierung und desto geringer ist der Verbrauch an wertvollen Ressourcen.

Weiterhin Gegenstand der Erfindung ist ein Verfahren zur Herstellung eines Polyurethanschaumes aus dem erfindungsgemäßen Polyurethanreaktivsystem, gekennzeichnet durch die Schritte
i. Bereitstellen der Komponenten A), B) und C,
ii. Mischen der Komponenten A) und B), um eine Vormischung zu erhalten,
iii. Mischen der in Schritt ii. erhaltenen Vormischung mit der Komponente C) in einem Mischkopf, um eine Mischung zu erhalten,
iv. Eintragen der in Schritt iii. erhaltenen Mischung in eine Werkzeugform,
v. Schäumenlassen der Mischung in der Werkzeugform, um einen Polyurethanschaum zu erhalten,
vi. Entformen des in Schritt v. erhaltenen Polyurethanschaums.

Ein weiterer Gegenstand der Erfindung ist ein Polyurethanschaum, erhältlich nach dem erfindungsgemäßen Verfahren.

Zur Bewertung des Fließverhaltens eines Polyurethanreaktivsystems wurden zwei Methoden ("Kreuzform" und "Ummanteln") verwendet, die im Folgenden näher beschrieben werden.

### Methodenbeschreibung: "Kreuzform"

Das Werkzeug zur Herstellung der Prüfplatten ist eine 5 mm starke, beheizbare Stahlform welche vor Versuchsbeginn auf eine Formtemperatur von 65°C aufgeheizt wird. Das Werkzeug wird senkrecht von unten nach oben befüllt und hat an der Oberseite zwei Entlüftungsschlitze, damit die beim Schäumvorgang verdrängte Luft entweichen kann.

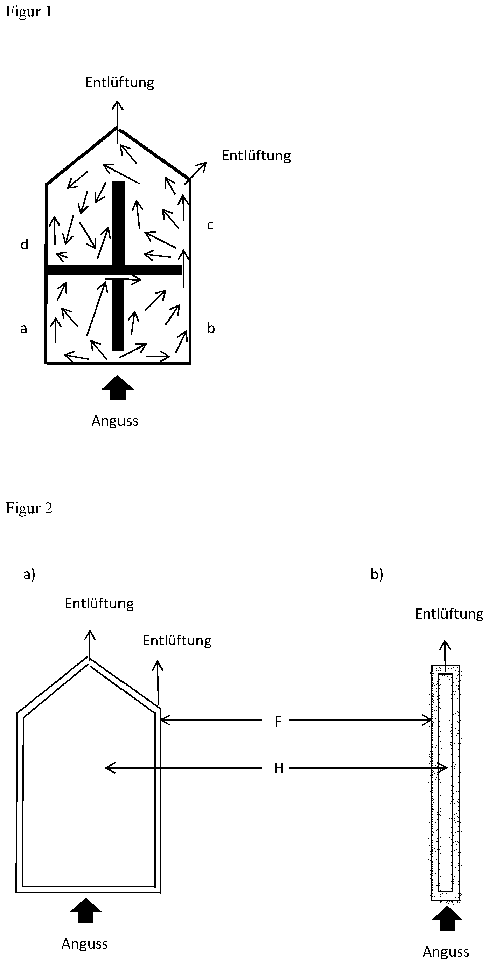

Das Werkzeug ist in 4 Quadranten a bis d aufgeteilt (Figur 1), welche nach dem Aushärten des Polyurethanes komplett mit Material gefüllt sein sollen.

In Figur 1 ist beispielhaft der Fließweg des Materials durch Pfeile dargestellt. Das Material muss bei immer gleicher Füllmenge in einer 5 mm starken Form durch unterschiedlich breite Fließhindernisse fließen: 3 mm Durchgang zwischen den Quadranten a und b, 7 mm zwischen den Quadranten b und c, 20 mm zwischen den Quadranten c und d. Eine zusätzliche Schwierigkeit für eine möglichst gleichmäßige Formfüllung besteht darin, dass im letzten Quadranten nur eine eingeschränkte Entlüftung möglich ist (Figur 1, Quadrant d). Anhand dieses Versuchsaufbaus wird die Fließfähigkeit des Materials dadurch ermittelt, dass die Dichten des Schaums in den vier Quadranten gemessen werden.

Die Dichten der vier Quadranten werden mittels Auftriebsverfahren im Wasserbad bestimmt: um die als Quotient aus Masse und Volumen definierte Dichte eines Körpers zu bestimmen, muss man die Größen Masse und Volumen ermitteln. Die Masse eines Körpers lässt sich durch Wägung sehr genau ermitteln. Bei unregelmäßig geformten Körpern eignet sich in vielen Fällen zur Bestimmung des Volumens, wenn eine unmittelbare Volumenmessung nicht möglich ist, die Auftriebskraft, die ein Körper erfährt, wenn man ihn in eine Flüssigkeit taucht. Hierzu wird der Körper mit seinem ganzen Volumen in eine Flüssigkeit bekannter Dichte getaucht und dabei gewogen. Das nun auf Grund der Auftriebskraft geringere Gewicht entspricht der Masse der verdrängten Flüssigkeit, deren Volumen über ihre bekannte Dichte errechnet wird. Das Volumen der verdrängten Flüssigkeit wiederum entspricht dem Volumen des Körpers.

Von den vier Einzelwerten wird anschließend die Standardabweichung ermittelt. Je niedriger die Standardabweichung ist, desto besser ist die Dichteverteilung der Prüfplatte und desto besser ist das Fließverhalten des Polyurethanreaktivsystems.

### Methodenbeschreibung: "Ummanteln"

Das Werkzeug zur Herstellung der Prüfplatten ist eine 10 mm starke, beheizbare Stahlform F, welche vor Versuchsbeginn auf eine Formtemperatur von 65°C aufgeheizt wird. Figur 2 zeigt schematisch zwei zueinander orthogonale Längsschnitte durch die Stahlform F mit eingelegter Holzplatte H. Das Werkzeug wird senkrecht von unten nach oben befüllt und hat an der Oberseite zwei Entlüftungsschlitze, damit die beim Schäumvorgang verdrängte Luft entweichen kann (Figur 2 a).

In die 10 mm starke Form wird eine 6 mm starke Holzplatte H eingelegt, welche an definierten Punkten durch selbstklebende Elastikpuffer immer exakt in der Mitte der Form gehalten wird. Dadurch wird die Holzplatte von allen Seiten mit einer 2 mm starken Polyurethanschaumschicht ummantelt (Figur 2 a und b).

Durch unterschiedliche Einfüllmengen des Polyurethanreaktivsystems, welche in die Form gefüllt werden, kann ermittelt werden, welche Mindesteinfüllmenge nötig ist, um den Holzeinleger komplett zu ummanteln.

In einer Versuchsreihe wird die Menge des eingesetzten Polyurethanreaktivsystems immer weiter reduziert, bis die Holzplatte nicht mehr komplett ummantelt ist. Je geringer die zum vollständigen Ummanteln der Holzplatte notwendige Polyurethanmenge ist, desto besser ist das Fließverhalten des Polyurethanreaktivsystems.

### Bewertung der "Formstandzeit"

Das Werkzeug zur Herstellung der Prüfplatten ist eine 20 mm starke, beheizbare Stahlform, welche vor Versuchsbeginn auf eine Formtemperatur von 65°C aufgeheizt wird. Das Werkzeug wird senkrecht von unten nach oben befüllt und hat an der Oberseite drei Entlüftungsschlitze, damit die beim Schäumvorgang verdrängte Luft entweichen kann.

Nach dem Aushärten des Polyurethanschaums wird das Werkzeug geöffnet und die Prüfplatte entnommen. Dieser Arbeitsschritt erfolgt nach festgelegten Entformungszeiten (z.B. 7 min, 6 min, 5 min).

Wenn die Prüfplatte nach 24 Stunden keinerlei Risse oder Verformungen aufweist, ist ein positives Ergebnis für die Formstandzeit erreicht.

### Bewertung "Trennwirkung"

Hierfür wird eine 10 mm starke, beheizbare Form F (Figur 2, ohne Holzeinleger H) auf 65 °C aufgeheizt.

Anschließend werden ohne Pause bei einer immer gleichen Formstandzeit von 3 Minuten 12 Prüfplatten ohne Einsatz von externen Trennmitteln (z.B. Wachse, Silikone und ähnliches) hergestellt und entformt. Beim Entformen wird festgestellt, ob und wenn ja, welche Schwierigkeiten auftreten und nach folgendem Muster benotet:

| Bewertungsparameter | Punkte |
|---|---|
| Leichtes Öffnen ohne Werkzeug möglich | 0 |
| Werkzeug schwer zu öffnen | 1 |
| Es wird Druckluft benötigt, um die Prüfplatte von der Form zu lösen | 2 |
| Die Form kann nicht ohne Hilfe von Werkzeug geöffnet werden | 2 |
| Die Prüfplatte kann nicht ohne Hilfe von Werkzeug entnommen werden | 3 |
| Die Form kann nicht geöffnet und die Prüfplatte nicht entnommen werden ohne Werkzeug | 4 |
| Prüfplatte wird bei der Entformung zerstört | 25 |

Dadurch erhält man am Ende der Serie 12 Zahlenwerte, deren Mittelwert errechnet wird. Es gilt dabei: je kleiner der Mittelwert, desto besser die Trennwirkung des Polyurethanreaktivsystems. Ein Mittelwert kleiner 3 entspricht einer guten, ein Mittelwert kleiner 1 einer sehr guten Trennwirkung.

### Bewertung "Phasenstabilität"

Um festzustellen, wie schnell sich das Gemisch bestehend aus der gegenüber Isocyanaten reaktiven Mischung A) und Zusatzstoffen B) entmischt, wird eine Probe in einem durchsichtigen Behältnis bei Raumtemperatur gelagert und einmal pro Woche begutachtet, ob eine Phasentrennung eingetreten ist. Eine gute Phasenstabilität des Gemischs entspricht einer Zeit von mindestens zwei Monaten ohne Phasentrennung.

### Allgemeine Beschreibung zur Herstellung der Prüfplatten:

Die gegenüber Isocyanaten reaktive Mischung A) und die Zusatzstoffe B) wurden mittels eines mechanischen Rührwerks miteinander vermischt. Anschließend wurde diese Mischung in einem Mischbecher zu der entsprechenden Menge der Isocyanatkomponente C) zugegeben und mittels eines Rührwerks vermischt. Danach wurde das flüssige Polyurethangemisch von unten nach oben über einen Anguss in das entsprechende Werkzeug gepresst. Nach der entsprechenden Formstandzeit wurde das Werkzeug geöffnet, und die Prüfplatte wurde zur Beurteilung entnommen.

Die verwendeten Herstellparameter sind in Tabelle 1 dargestellt. Die verwendeten Einsatzmengen an gegenüber Isocyanaten reaktiver Mischung A), Zusatzstoffen B) und Isocyanatkomponente C) lassen sich entsprechend der Kennzahl ermitteln. Die erhöhte Dauer und Intensität des Mischens der Komponenten A) und B) für die Untersuchung des Trennverhaltens resultierten aus den größeren benötigten Materialmengen und daraus, dass für größere Mengen entsprechend die Parameter angepasst werden mussten, um konstante Mengen an Luft in der Mischung und Temperaturen der Mischungen zu erzielen, um das Fließverhalten vergleichen zu können.

Polyurethanschäume mit unterschiedlichen Freischaumdichten haben unterschiedliche Treibkräfte, so dass sich ihr Fließverhalten nicht vergleichen lässt. Zum Vergleichen des Fließverhaltens verschiedener Polyurethanformulierungen war es daher notwendig, die Kennzahl und die Freischaumdichte konstant zu halten. Die Freischaumdichte ist von der Zusammensetzung der Polyurethanformulierung und der enthaltenen Wassermenge abhängig. Um eine konstante Freischaumdichte zu haben, wurde die Wassermenge der verwendeten Polyurethanformulierungen angepasst.

Die Reaktivität einer Polyurethanformulierung wird durch die enthaltenen Einsatzstoffe (z.B. gegenüber Isocyanaten reaktive Gruppen aufweisende Komponenten (insbesondere Polyole), Katalysatoren, etc.) bestimmt. Die Reaktivität beeinflusst ebenfalls das Fließ-verhalten der Polyurethanformulierung. Daher wurde die Reaktivität der verwendeten Polyurethanschaumformulierungen über den Katalysatorgehalt so angepasst, dass die Abbindezeiten der Polyurethanreaktivsysteme nahezu gleich waren, so dass die Vergleichbarkeit des Fließverhaltens verschiedener Polyurethanformulierungen gegeben war.

Im Sinne dieser Erfindung ist die Freischaumdichte die Dichte eines frei, das heißt ohne Gegendruck geschäumten Polyurethanschaumes.

**Tabelle 1: Übersicht der Herstellparameter zur Herstellung der Prüfplatten**

| Parameter | "Kreuzform" | "Ummanteln" | Formstandzeit | Trennverhalten |
|---|---|---|---|---|
| Mischen der gegenüber Isocyanaten reaktiven Mischung A) mit den Zusatzstoffen B) | 3.300 U/min 30 sec | 3.300 U/min 30 sec | 3.300 U/min 30 sec | 4.200 U/min 35 sec |
| Vermischen des Gemischs aus A) und B) mit Isocyanatkomponente C) | 4.000 U/min 6 sec | 4.000 U/min 6 sec | 4.000 U/min 6 sec | 4.000 U/min 6 sec |
| Oszillationshub des Rührers | 2,5 cm | Aus | 2,5 cm | 4 cm |
| Gesamteinsatzmenge (gegenüber Isocyanaten reaktive Mischung A), Zusatzstoffe B) und Isocyanatkomponte C) | 220 g | 155 g bzw. weniger | 256 g | 412 g |

### Eingesetzte Komponenten:

Gegenüber Isocyanaten reaktive Mischung A)
   Komponente A1-1: Dreifunktioneller Polyether mit der OHZ 830 mg KOH/g, erhalten durch Addition von Propylenoxid an Trimethylolpropan
   Komponente A1-2: Polyether mit der OHZ 28 mg KOH/g, erhalten durch die Addition von Propylenoxid und Ethylenoxid (Verhältnis 70:30) an Propylenglykol, mit überwiegend primären OH-Gruppen
   Komponente A2-1; hergestellt aus 15 Gew.-Teilen 3-(Dimethylamino)-1-propylamin (C₅H₁₄N₂; [M=102,2 g/mol]) und 85 Gew.-Teilen Tallöl
   Komponente A3-1: Additionsprodukt von Ethylenoxid an Ethylamin (C₂H₇N; [M=45,1 g/mol]) mit der OHZ 465 mg KOH/g
Zusatzstoffe B)
   Stabilisator B-1: Tegostab® B8411 der Fa. EVONIK, auf Basis von Polyetherpolysiloxanen
   Katalysator B-2: Dabco® 33LV der Fa. EVONIK, auf Basis von tertiären Aminen
   Internes Trennmittel B-3: Fettsäureester hergestellt aus 544 Gew.-Teilen Pentaerythrit, 3390 Gew.-Teilen Ölsäure und 292 Gew.-Teilen Adipinsäure; OHZ 19,5 mg KOH/g; Säurezahl 25 mg KOH/g; Molekulargewicht etwa 1100 g/mol.
Isocyanatkomponente C)
   MDI basiertes Prepolymer C-1: Fa. Covestro
   erhältlich aus 95 Gew.-Teilen (0,38 mol) eines Polyisocyanates, das durch Phosgenierung von Anilin-Formaldehyd-Kondensaten hergestellt wurde und eine Viskosität von 320 mPa·s (bei 25 °C) und einen NCO-Gehalt von 31,5 Gew.-% aufweist, und 5 Gew.-Teilen (0,004 mol) des Fettsäureesters B-3. Die Komponenten werden bei 70 °C zur Reaktion gebracht. Das Reaktionsgemisch wurde 4 Stunden unter Rühren auf 70 °C gehalten. Nach Beendigung der Reaktion beträgt der NCO-Gehalt des erhaltenen Prepolymers 29 Gew.-%.

In Tabelle 2 sind beispielhafte Polyurethanformulierungen dargestellt, sowie deren Bewertung hinsichtlich Phasenstabilität, Kinetik, Formstandzeit, Trennverhalten und Fließverhalten. Die Ansätze 01 und 02 stellen nicht erfindungsgemäße Vergleichsbeispiele mit schlechtem Fließverhalten dar. Die Ansätze 03 bis 06 stellen erfindungsgemäße Polyurethanformulierungen mit verbessertem Fließverhalten dar.

Polyurethanformulierungen mit besonders gutem Fließverhalten ergeben in der Methode "Kreuzform" eine geringe Standardabweichung der Dichte der einzelnen Quadranten, da dies einer engen Dichteverteilung entspricht. Des Weiteren ist die benötigte Einfüllmenge zum vollständigen Ummanteln eine Holzplatte (Methode: "Ummanteln") klein, wenn das Fließverhalten gut ist, da in diesen Fällen weniger Material benötigt wird.

**Tabelle 2: Übersicht der Versuchsbeispiele und Bewertung der Polyurethansysteme (Angabe der Komponenten in Gew.-Teilen)**

| Komponente / Ansatz | | 01 | 02 | 03 | 04 | 05 | 06 |
|---|---|---|---|---|---|---|---|
| Komponente A1 | A1-1 | 40,0 | 40,0 | 40,0 | 40,0 | 40,0 | 40,0 |
| | A1-2 | 30,0 | 30,0 | 30,0 | 30,0 | 30,0 | 30,0 |
| Komponente A2 | A2-1 | 7,5 | - | 10,0 | 12,0 | 15,0 | 5,0 |
| Komponente A3 | A3-1 | - | 4,0 | 5,0 | 10,0 | 5,0 | 10,0 |
| Zusatzstoffe B) | Wasser | 1,2 | 1,2 | 0,9 | 0,9 | 0,9 | 1,0 |
| | Stabilisator B-1 | 2,0 | 2,0 | 2,0 | 2,0 | 2,0 | 2,0 |
| | Katalysator B-2 | 1,5 | 1,5 | 0,5 | - | - | 0,4 |
| | Internes Trennmittel B-3 | 2,5 | 2,5 | 2,5 | 2,5 | 2,5 | 2,5 |
| Isocyanat C) | C-1 | 116,8 | 119,4 | 117,1 | 123,6 | 118,4 | 123,6 |
| Kenndaten Polyurethan Formulierung | Misch-OHZ der gegenüber Isocyanaten reaktiven Mischung A) | 446 | 482 | 438 | 433 | 419 | 460 |
| | Kennzahl | 100 | 100 | 100 | 100 | 100 | 100 |
| | Phasenstabilität in Monaten | >2 | >2 | >2 | >2 | >2 | >2 |
| Kinetische Kenndaten Polyurethan schaum | Startzeit in s | 14 | 17 | 13 | 13 | 14 | 15 |
| | Abbindezeit in s | 31 | 29 | 30 | 30 | 32 | 31 |
| | Freie Rohdichte in kg/m³ | ∼110 | ∼110 | ∼110 | ∼110 | ∼110 | ∼110 |
| Bewertung Polyurethan Formteil (Musterplatte, 20 mm) | Formstandzeit in min | <5 | <5 | <5 | <5 | <5 | <5 |
| | Trennverhalten | gut | gut | gut | gut | gut | gut |
| Bewertung Fließverhalten Polyurethanschaum | Standardabweichung Dichte "Kreuzform" in kg/m³ | 23,2 | 28 | 19,5 | 10,9 | 11,5 | 11,1 |
| | Dichte des Polyurethanschaums im Versuch "Ummanteln" in kg/m³ | 413 | 388 | 364 | 350 | 350 | 313 |
| Information | | nicht erfindungsgemäß | nicht erfindungsgemäß | erfindungsgemäß | erfindungsgemäß | erfindungsgemäß | erfindungsgemäß |

Die erfindungsgemäßen Beispiele 3 bis 6 zeigten in der Bewertung des Fließverhaltens besonders gute Werte. So war die Standardabweichung der Dichte der "Kreuzform" aller Quadranten (Methode: "Kreuzform") immer kleiner als in den nicht erfindungsgemäßen Vergleichsbeispielen 1 und 2. Die Dichten der Polyurethanschaum ummantelten Holzplatten (Methode: "Ummanteln") war in den erfindungsgemäßen Beispielen immer erheblich kleiner als in den nicht erfindungsgemäßen Vergleichsbeispielen 1 und 2.

Gleichzeitig ergaben sich in den erfindungsgemäßen Polyurethanreaktivsystemen keine Nachteile im Hinblick auf die übrigen Parameter Phasenstabilität, Formstandzeit und Trennverhalten im Vergleich zu den Formulierungen des Standes der Technik:
In allen Ansätzen 01 - 06) ist die Phasenstabilität der Mischung aus der gegenüber Isocyanaten reaktiven Mischung A) und Zusatzstoffen B) größer als 2 Monate.

Die Formstandzeit (Methode: Formstandzeit) lag bei allen Ansätzen bei weniger als 5 Minuten.

Das Trennverhalten war in allen Ansätzen "gut".

## Patentansprüche

1. Polyurethanreaktivsystem, umfassend:
Gegenüber Isocyanaten reaktive Mischung A), bestehend aus:
- 67 - 95 Gew.-%, bezogen auf die gegenüber Isocyanaten reaktive Mischung A), Komponente A1: Mischung umfassend ein oder mehrere Polyole A1a mit einer OHZ > 500 mg KOH/g und einer Funktionalität f zwischen 2,5 und 6 und ein oder mehrere Polyole A1b mit einer OHZ <100 mg KOH/g und einer Funktionalität f zwischen 2 und 4, jeweils unabhängig voneinander ausgewählt aus der Gruppe bestehend aus Polyetherpolyolen, Polyesterpolyolen, Polyethercarbonatpolyolen, Polyetheresterpolyolen und Amin-gestarteten Polyetherpolyolen, wobei die Misch-OHZ der Komponente A1 zwischen 300 und 800 mg KOH/g liegt,
- 2-18 Gew.-%, bezogen auf die gegenüber Isocyanaten reaktive Mischung A), Komponente A2: Reaktionsprodukt eines Amins, das mindestens zwei Aminogruppen enthält, wobei mindestens eine Aminogruppe ein tertiäres Amin ist, mit einer Fettsäure der Kettenlänge C₁₆ - C₂₀,
- 3-15 Gew.-%, bezogen auf die gegenüber Isocyanaten reaktive Mischung A), Komponente A3: Reaktionsprodukt, erhalten aus der Addition von Propylenoxid und/oder Ethylenoxid an ein Monoalkylamin mit einem Alkylrest der Kettenlänge C₂ bis C₆, mit einer OHZ von 260 bis 510 mg KOH/g,
wobei die Summe der Gew.-% der Komponenten A1, A2 und A3 100 Gew.-% beträgt,
Zusatzstoffe B), umfassend:
- 0,1 - 2,0 Gew.-%, bezogen auf die gegenüber Isocyanaten reaktive Mischung A), Wasser,
- 0,1 - 3,0 Gew.-%, bezogen auf die gegenüber Isocyanaten reaktive Mischung A), einen oder mehrere Zellstabilisatoren,
- gegebenenfalls Kohlenwasserstoffe als physikalische Treibmittel,
- gegebenenfalls Katalysatoren,
- gegebenenfalls interne Trennmittel,
- gegebenenfalls Hilfs- und Füllstoffe (z.B. flüssige oder feste Flammschutzmittel, mineralische Füllstoffe),
Isocyanatkomponente C), bestehend aus:
bei Raumtemperatur flüssigen Di- und/oder Polyisocyanaten der Diphenylmethanreihe, Modifikationen, Prepolymeren davon oder Mischungen daraus mit einem NCO-Gehalt von 25 Gew.-% bis 33,6 Gew.-%,
wobei die Komponenten A), B) und C) in einer Menge eingesetzt werden, dass die Kennzahl 80 bis 130 beträgt.

2. Polyurethanreaktivsystem gemäß Anspruch 1, wobei die Misch-OHZ der Komponente A1 400 - 650 mg KOH/g beträgt.

3. Polyurethanreaktivsystem gemäß einem der Ansprüche 1 oder 2, wobei die gegenüber Isocyanaten reaktive Mischung A) 5 - 15 Gew.-%, bevorzugt 8-13 Gew.-%, jeweils bezogen auf die gegenüber Isocyanaten reaktive Mischung A), der Komponente A2 umfasst.

4. Polyurethanreaktivsystem gemäß einem der Ansprüche 1 bis 3, wobei es sich bei A2 um das Reaktionsprodukt einer Fettsäure mit der Kettenlänge C₁₆ - C₂₀ mit einem Amin der allgemeinen Formel R,R'-N-X-NH₂ handelt, wobei X, R und R' unabhängig voneinander für substituierte oder unsubstituierte, lineare oder verzweigte, aromatische oder aliphatische Kohlenwasserstoffreste stehen und wobei R und R' unabhängig voneinander Kohlenwasserstoffreste mit 1 bis 6, bevorzugt 1 bis 4, 1 bis 3 oder 1 bis 2 C-Atomen sind.

5. Polyurethanreaktivsystem gemäß einem der Ansprüche 1 bis 4, wobei die gegenüber Isocyanaten reaktive Mischung A) 4 - 12 Gew.-%, bevorzugt 7-12 Gew.-%, jeweils bezogen auf die gegenüber Isocyanaten reaktive Mischung A), der Komponente A3 umfasst, wobei die Komponente A3 eine OHZ von 400 - 500 mg KOH/g aufweist.

6. Polyurethanreaktivsystem gemäß einem der Ansprüche 1 bis 5, wobei die Isocyanatkomponente C) keine Dicarbonatester in einem Ausmaß, das über natürliche Verunreinigungen hinausgeht, aufweist.

7. Verfahren zur Herstellung eines Polyurethanschaumes aus dem Reaktivsystem gemäß einem der Ansprüche 1 bis 6, **gekennzeichnet durch** die Schritte
i. Bereitstellen der Komponenten A), B) und C),
ii. Mischen der Komponenten A) und B), um eine Vormischung zu erhalten,
iii. Mischen der in Schritt ii. erhaltenen Vormischung mit der Komponente C) in einem Mischkopf, um eine Mischung zu erhalten,
iv. Eintragen der in Schritt iii. erhaltenen Mischung in eine Werkzeugform,
v. Schäumenlassen der Mischung in der Werkzeugform, um einen Polyurethanschaum zu erhalten,
vi. Entformen des in Schritt v. erhaltenen Polyurethanschaums.

8. Polyurethanschaum erhältlich aus dem Verfahren gemäß Anspruch 7.
